# EUROPÄISCHE PATENTSCHRIFT

(11) **EP 0 521 354 B1**
(45) Veröffentlichungstag und Bekanntmachung des Hinweises auf die Patenterteilung: **19.10.1994**
(21) Anmeldenummer: 92110349.5
(22) Anmeldetag: 19.06.1992
(51) Int. Cl.: F01L 1/04, B23P 11/00, F16D 1/06

(54) **Nockenwelle zur Steuerung von Ventilen bei Verbrennungskraftmaschinen**
Camshaft for valve control in internal combustion engines
Arbre à cames pour le contrôle des soupapes dans les moteurs à combustion interne

(30) Priorität: 03.07.1991 DE 4121951
(43) Veröffentlichungstag der Anmeldung: 07.01.1993
(73) Patentinhaber: ETABLISSEMENT SUPERVIS, FL-9490 Vaduz (LI)
(72) Erfinder: Matt, Lukas, Dipl.-Ing., FL-9492 Eschen (LI)
(74) Vertreter: Hefel, Herbert, Dipl.-Ing.

(56) Entgegenhaltungen:
- EP-A- 0 291 902
- EP-A- 0 340 128
- DE-A- 2 336 241
- FR-A- 2 101 576
- FR-A- 2 365 048
- US-A- 2 254 503

## Beschreibung

Die Erfindung bezieht sich auf eine Nockenwelle zur Steuerung von Ventilen bei Verbrennungskraftmaschinen mit den Merkmalen des Oberbegriffes des Patentanspruches 1.

In der DE-OS 37 17 190 ist eine Nockenwelle dieser Art beschrieben und gezeigt sowie das Verfahren zur Herstellung einer solchen Nockenwelle erläutert. Die Nocken, die bei dieser bekannten Konstruktion auf die Welle aufgeschoben werden, sind durch Sintern hergestellt. Der aus dem Sinterwerkstoff gepreßte Rohling (Grünling) ist so geformt, daß die Aussparung, die die Welle aufzunehmen hat, radial auskragende Vorsprünge aufweist, die sich über die gesamte axiale Länge des Nockens bzw. der genannten Ausnehmung erstrecken. Dabei sind über den Umfang der Ausnehmung mehrere solcher Vorsprünge vorgesehen, und zwar in gleichmäßiger Verteilung. In Folge dieser leisten- oder federartigen Vorsprünge weist die Ausnehmung über ihren Umfang einen nicht stetigen Verlauf auf, d. h., diese Ausnehmung weist mehrere Stellen auf, an welchen eine unbestimmte Anzahl von Tangenten -zumindest theoretisch - legbar ist. Der Durchmesser dieser Ausnehmung des Nockens entspricht im wesentlichen dem Durchmesser der aufgeweiteten Bereiche der Welle, so daß, wenn die erwähnten inneren Vorsprünge nicht vorhanden wären, die Nocken auf die aufgeweiteten Bereiche der Welle ohne besonderen Kraftaufwand aufgeschoben werden könnten. Diese in der Ausnehmung angeformten Leisten - bzw. federartigen Vorsprünge bzw. ihre in Aufschiebrichtung gesehen vordere Stirnkante und Stirnseite haben bei dieser bekannten Konstruktion die Aufgabe, sozusagen als Hobel zu wirken und zu dienen, der sich die für den Formschluß zwischen Welle und Nocken erforderliche Nut beim Aufschieben des Nockens auf die Welle schafft. Der aufgeschobene Nocken wird durch reinen Formschluß auf der Welle bei dieser vorbekannten Konstruktion gehalten. Diese bekannte Konstruktion ist für Nockenwellen mit gesinterten Nocken außerordentlich rationell herzustellen.

Es gibt zahlreiche Motoren, für welche Nockenwellen mit geschmiedeten Stahlnocken bevorzugt und gefordert werden. Solche Stahlnocken werden geschmiedet und anschließend geglüht, um eine bestimmte Gefügestruktur zu erreichen, die äußere Kontur wird gehärtet und die Bohrung ausgedreht. Es ist bei solchen geschmiedeten Stahlnocken nicht möglich, mit zumutbarem Aufwand an der Innenseite der Ausnehmung leisten- oder federartige Vorsprünge vorzusehen, wie dies bei gesinterten Nocken ohne besonderen Aufwand gemacht werden kann. Bei einem Stahlnocken müßte die Bohrung, um solche Vorsprünge zu schaffen, spanabhebend nachbearbeitet, beispielsweise geräumt werden. Ein solcher Fertigungsschritt ist aus Kostengründen nicht machbar. Eine solche Bearbeitung würde die Kosten für die Nacken gegenüber jenen, die für einen geschmiedeten Nocken notwendigerweise aufgewandt werden müßten, beträchtlich erhöhen.

Dem steht andererseits die Feststellung gegenüber, daß eine Nockenwelle mit gesinterten Nocken und mit dem eingangs genannten Aufbau außerordentlich wirtschaftlich hergestellt werden kann, so daß das Bestreben vorhanden ist, auch für Nockenwellen mit geschmiedeten Stahlnocken ein vergleichbares Fertigungsverfahren anzustreben. Kostengründe, wie aufgezeigt, stehen jedoch diesem Bestreben hindernd im Wege.

Ausgehend vom bekannten Stand der Technik, wie oben geschildert, schlägt nun die Erfindung zur Lösung dieser Aufgabe jene Maßnahmen vor, die Inhalt und Gegenstand des kennzeichnenden Teiles des Patentanspruches 1 sind. Dank dieser erfindungsgemäßen Maßnahme kann das für Nockenwellen mit gesinterten Nacken bekannte Verfahren bei Nockenwellen mit geschmiedeten Nacken angewandt werden, wobei hier anstelle eines Formschlusses zwischen Welle und Nacken primär ein Reibungsschluß tritt. Durch die trichterartige Aufweitung der Ausnehmung im geschmiedeten Nacken wird eine Einlaufzone für die Wülste oder Stege geschaffen, in die die Wülste bzw. Stege unter bleibender Verformung eingepreßt werden, so daß zwischen diesen Wülsten und Stegen und der Innenseite des geschmiedeten Nockens ein Reibungsschluß von außerordentlichem Haltevermögen entsteht. Wenn in diesem Zusammenhang vom Ausmaß der Mündungsöffnung der trichterartigen Aufweitung ausgesagt ist, daß sie "etwa" der radialen Höhe der Wülste oder Stege entspricht, so ist dies so zu verstehen, daß dieses Ausmaß gleich, größer oder auch um ein geringes Maß kleiner sein kann als die erwähnten Höhen. Die trichterartige Aufweitung kann dabei von einer Kegelfläche begrenzt bzw. gebildet sein oder auch von ebenen Flächen, die in ihrer Summe einen Pyramidenstumpf bilden.

Die Zeichnung veranschaulicht die Erfindung. Es zeigen:
- Fig. 1: eine Nockenwelle mit geschmiedeten Nocken in Schrägsicht;
- Fig. 2: die Ansicht eines geschmiedeten Nockens und
- Fig. 3: einen Längsschnitt durch diesen Nocken nach Fig. 2;
- Fig. 4: einen Abschnitt der Welle mit durch Materialverdrängung gebildeten Stegen oder Wülsten;
- Fig. 5: eine zum Gegenstand der Figur ähnliche Ausführungsform;
- Fig. 6: den Aufschiebevorgang bei einem geschmiedeten Nocken und
- Fig. 7: den aufgeschobenen Nocken in funktionsrichtiger Stellung.

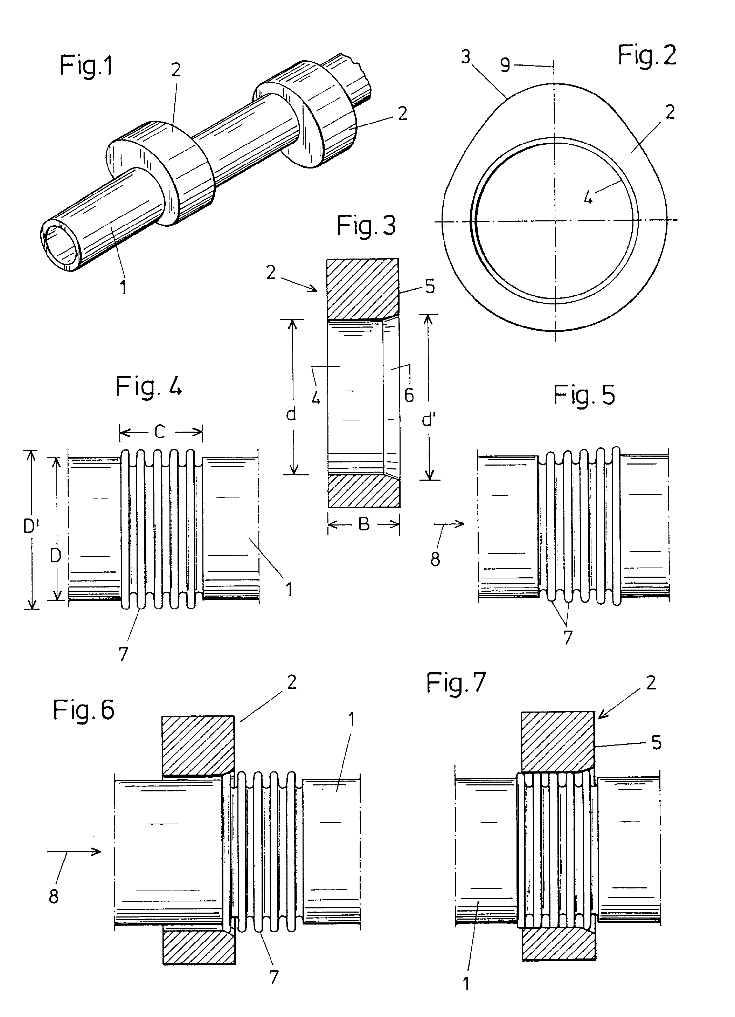

Die Nockenwelle nach Fig. 1 besteht aus einem Wellenrohr 1 und den aufgeschobenen und durch Reibungsschluß fixierten, durch Schmieden hergestellten Nocken 2, die auf diesem Wellenrohr 1 winkelversetzt zueinander angeordnet sind. Anstelle eines Wellenrohres kann auch eine Welle mit vollem Querschnitt verwendet werden. Ein solcher warm geschmiedeter und für die Aufbringung auf dem Wellenrohr 1 vorbereiteter Nocken veranschaulichen die Fig. 2 und 3. Die Außenkontur 3 des Nockens 2 ist gegeben durche die Spezifikationen des jeweiligen Einsatzgebietes. Die Ausnehmung 4 zur Aufnahme des Wellenrohres 1 besitzt hier über ihren gesamten Umfang eine kontinuierlich verlaufende Wandung, wobei der Durchmesser d dieser Ausnehmung 4 um ein geringes Maß größer ist als der Außendurchmesser D des Wellenrohres. Unter einem kontinuierlichen Verlauf der Wandung der Ausnehmung 4 wird eine solche Kontur verstanden, an welche an jedem beliebigen Punkt nur eine Tangente legbar ist. Im gezeigten Ausführungsbeispiel ist der Querschnitt der Ausnehmung (4) - wie üblich -kreisförmig. Zumindest auf der einen Stirnseite 5 des Nockens 2 geht diese Ausnehmung 4 in eine trichterartige Aufweitung 6 über, wobei der Öffnungwinkel dieser trichterartigen Aufweitung 6 ca. 20° beträgt. Bezogen auf die axiale Länge der Ausnehmung 4 beträgt die Länge dieser trichterartigen Aufweitung 6 nur einen Bruchteil derselben, nämlich beträgt das Verhältnis dieser Längen ca. 5:1.

Fig. 4 veranschaulicht jenen Abschnitt des Wellenrohres 1, auf welchem der geschmiedete Nocken nach den Fig. 2 und 3 anzuordnen ist. Mittels rollender Werkzeuge, wie sie auch zum Herstellen von aufgerollten Gewinden dienen, werden in diesem Bereich C mehrere durch Materialverdrängung erzeugte Wülste oder Stege 7 geschaffen, wobei der Durchmesser D des Wellenrohres 1 etwas kleiner ist als der Innendurchmesser d der Ausnehmung 4 und der Außendurchmesser D′ der Wülste oder Stege 7 um ein geringes Maß kleiner ist als der Durchmesser d′ der Mündungsöffnung der trichterartigen Aufweitung 6. Beim Ausführungsbeispiel nach Fig. 4 ist der Durchmesser D′ des erweiterten Bereiches C des Wellenrohres 1 über seine axiale Länge im wesentlichen konstant. Beim Ausführungsbeispiel nach Fig. 5 nimmt der Durchmesser der Wülste oder Stege 7 in Verschieberichtung (Pfeil 8) des Nockens zu. Bei einer solchen Ausgestaltung des erweiterten Bereiches, bei welchem also die radialen Höhen der Wülste oder Stege in Aufschieberichtung (Pfeil 8) keil- oder kegelartig zunehmen, wird die Ausnehmung 4 im Nocken 2 vorzugsweise über ihre Länge ebenfalls kegelartig gestaltet, wobei auch in diesem Falle eine trichterartig aufgeweitete Einlaufzone 6 vorgesehen werden wird.

Fig. 6 zeigt nun den Augenblick, in dem beim Aufschieben des Nockens 2 auf das Wellenrohr 1, also bei der Montage der Nockenwelle, der geschmiedete Nocken 2 mit seiner trichterartigen Mündungsöffnung den in Verschieberichtung (Pfeil 8) ersten Wulst oder Steg 7 erreicht hat. Durch die trichterförmig erweiterte Einlaufzone 6 werden die Wülste oder Stege 7 nun verformt, und zwar im äueren Bereich und sozusagen in die Ausnehmung 4 hineingequetscht oder hineingedrückt, wie dies aus Fig. 7 ersichtlich ist, die den nun zur Gänze auf den Bereich C aufgeschobenen Nocken zeigt. Der Nocken 2 sitzt auf dem Wellenrohr 1 und wird hier ausschließlich reibungsschlüssig gehalten, wobei aufgrund der hier wirksamen hohen Verformungskräfte ein sicherer und fester Halt des Nockens gewährleistet ist, obwohl von dem Material, das das Wellenrohr 1 bildet, nur ein ganz geringer Bruchteil verformt worden ist.

Beim gezeigten Ausführungsbeispiel ist die Ausnehmung 4, die über ihren gesamten Umfang einen stetigen Verlauf aufweist, als zylindrische Bohrung ausgebildet. Es liegt im Rahmen der Erfindung, diese Ausnehmung 4 etwa oval zu formen, also dieser Ausnehmung eine Kontur zu geben, die von der Kreisform abweicht, wobei die lange Achse dieses Ovals zweckmäßigerweise in der Symmetrieebene 9 des Nockens liegt, die kurze Achse des Ovals rechtwinkelig dazu steht. In diesem Fall werden die Abmessungen der miteinander in Wirkverbindung tretenden Teile so gewählt, daß der kleinste Durchmesser dieser ovalen Ausnehmung um ein geringes Maß größer ist als der Durchmesser der zwischen den erweiterten Bereichen der Welle liegenden Abschnitte und der größte Durchmesser der ovalen Ausnehmung kleiner ist als die radiale Höhe der Wülste oder Stege. Beim Aufschieben eines solchen Nockens werden die äußeren Zonen und Ränder der Wülste bzw. Stege in eben der Weise verformt, wie dies vorstehend schon beschrieben worden ist. Darüber hinaus wird aber durch diese Formgebung noch zusätzlich ein Formschluß erzielt. Ist vorstehend erwähnt, daß die Ausnehmung 4 des Nockens 2 eine von der Kreisform abweichende, eventuell ovale Form aufweist, so können diese geometrischen Figurationen in korrespondierender Weise auch auf das Wellenrohr bzw. die Welle übertragen werden.

Mit modernen programmgesteuerten Arbeitsmaschinen können solche ovale Ausnehmungen ohne besonderen Aufwand und ohne besondere zusätzliche Kosten hergestellt werden. Mit solchen Maschinen ist es aber auch möglich, eine Ausnehmung vieleckig zu gestalten, so daß ihr Querschnitt die Gestalt eines Vieleckes, vorzugsweise eines regelmäßigen Vieleckes hat. Über eine große Anzahl von Vieleckseiten kann dabei die Kreis- oder Ovalform angenähert werden. Zumindest theoretisch sind solche Vielecke unstetig, da in den Ecken, in denen aufeinanderfolgende gerade Seiten aufeinander stoßen, mehrere Tangenten legbar sind. Die trichterartige Aufweitung der Mündungsöffnung kann dabei trotzdem durch eine Kegelfläche gebildet sein. Es liegt aber auch im Rahmen der Erfindung, hier ebene Flächen vorzusehen, deren Anzahl der Anzahl der Seiten des Vieleckes entspricht.

Beim beschriebenen und besprochenen Ausführungsbeispiel verlaufen die durch Materialverdrängung erzielten Wülste oder Stege in Umfangsrichtung der Welle. Es ist auch möglich, die Nockenwelle so auszugestalten, daß die durch Materialverdrängung erzielten Wülste oder Stege im wesentlichen parallel zur Achse der Nockenwelle verlaufen.

Dank des erfindungsgemäßen Vorschlages ist es möglich, zusammengesetzte Nockenwellen auch mit geschmiedeten Nocken auf sehr rationelle Weise herzustellen.

Wenn vorstehend in der Beschreibung und auch in den Patentansprüchen im Zusammenhang mit den Nocken von Schmieden die Rede ist, so ist unter diesem allgemeinen Begriff eine Druckumformung des Materials bzw. des Werkstücks mit gegeneinander bewegten Formwerkzeugen (im Sinne der Norm nach DIN 8583, B1. 4) zu verstehen.

## Patentansprüche

1. Nockenwelle zur Steuerung von Ventilen bei Verbrennungskraftmaschinen mit einer Welle und mindestens einem auf die Welle aufgeschobenem und mit ihr fest verbundenen Nocken, der eine Ausnehmung zur Aufnahme der Welle besitzt, wobei die Welle in jenem Bereich, an welchem der Nocken vorgesehen ist, einen gegenüber den anderen Bereichen der Welle vergrößerten Durchmesser aufweist und dieser Bereich durch Rollen oder Walzen gefertigte, durch Materialverdrängung erzielte Wülste oder Stege gebildet ist, dadurch gekennzeichnet, daß der Nocken (2) durch Schmieden geformt ist und die Ausnehmung (4) im Nocken zur Aufnahme der Welle (1) zumindest auf einer Seite und zumindest über einen Teil ihrer axialen Länge trichterartig aufgeweitet ist, wobei das Ausmaß der Mündungsöffnung der trichterartigen Aufweitung (6) etwa der radialen Höhe der Wülste oder Stege (7) entspricht, wobei die axiale Länge der trichterartigen Aufweitung (6) der Ausnehmung (4) nur einen Bruchteil der Breite (B) des Nockens (2) entspricht, das Verhältnis dieser Längen annähernd 1:5 beträgt und der Öffnungswinkel der trichterartigen Aufweitung (6) ca. 20° beträgt.

2. Nockenwelle nach Anspruch 1, dadurch gekennzeichnet, daß die radiale Höhe der Wülste oder Stege (7) entlang der axialen Erstreckung der Welle (1) von der Ein- bzw. Aufschubseite des Nockens (2) ausgehend keil- bzw. kegelartig ansteigt (fig. 5).

3. Nockenwelle nach Anspruch 1, dadurch gekennzeichnet, daß die Ausnehmung im Nocken zur Aufnahme der Welle eine von der Kreisform abweichende, beispielsweise ovale Form aufweist, wobei der kleinste Durchmesser dieser ovalen Ausnehmung um ein geringes Maß größer ist als der Durchmesser der zwischen den erweiterten Bereichen der Welle liegenden Abschnitte und der größte Durchmesser der ovalen Ausnehmung kleiner ist als die radiale Höhe der Wülste oder Stege.

4. Nockenwelle nach einem der Ansprüche 1 bis 3, dadurch gekennzeichnet, daß die Ausnehmung (4) im Nocken (2) zur Aufnahme der Welle (1) über ihren gesamten Umfang einen kontinuierlichen Verlauf besitzt.

5. Nockenwelle nach einem der Ansprüche 1 bis 3, dadurch gekennzeichnet, daß die Ausnehmung (4) im Nocken (2) zur Aufnahme der Welle (1) über ihren Umfang einen diskontinuierlichen Verlauf aufweist, beispielsweise die Form eines vorzugsweise regelmäßigen Vieleckes hat.

6. Nockenwelle nach Anspruch 1, dadurch gekennzeichnet, daß die durch Materialverdrängung erzielten Wülste oder Stege in Umfangsrichtung der Welle verlaufen.

7. Nockenwelle nach Anspruch 1, dadurch gekennzeichnet, daß die durch Materialverdrängung erzielten Wülste oder Stege im wesentlichen parallel zur Achse der Nockenwelle verlaufen.

## Claims

1. A camshaft for controlling valves in combustion engines, having a shaft and at least one cam which is pushed onto the shaft, is securely connected to the latter and has an opening for receiving the shaft, the diameter of the shaft region in which the cam is provided being larger than the diameter of the other regions of the shaft and this region of enlarged diameter being formed by beads or ridges which are produced by rollers or rolls and are obtained by material displacement, characterised in that the cam (2) is shaped by forging and the opening (4) in the cam for receiving the shaft (1) is - on at least one side and over at least part of its axial length - widened in a funnel-like manner, the dimension of the mouth opening of the funnel-like widening (6) substantially corresponding to the radial height of the beads or ridges (7), the axial length of the funnel-like widening (6) of the opening (4) only corresponding to a small portion of the width (W) of the cam (2), the ratio of these lengths being approximately 1: 5 and the aperture angle of the funnel-like widening (6) being approximately 20°.

2. A camshaft in accordance with Claim 1, characterised in that the radial height of the beads or ridges (7) increases - in a wedge-like or cone-like manner - along the axial extension of the shaft (1), from the direction in which the cam (2) is pushed in or on (Fig. 5).

3. A camshaft in accordance with Claim 1, characterised in that the opening in the cam for receiving the shaft has a non-circular shape, for example an oval shape, the smallest diameter of this oval opening being slightly larger than the diameter of the portions located between the widened regions of the shaft and the largest diameter of the oval opening being smaller than the radial height of the beads or ridges.

4. A camshaft in accordance with any one of Claims 1 to 3, characterised in that the opening (4) in the cam (2) for receiving the shaft (1) has a continuous course over its entire circumference.

5. A camshaft in accordance with any one of Claims 1 to 3, characterised in that the opening (4) in the cam (2) for receiving the shaft (1) has a discontinuous course over its circumference for example has the shape of a polygon which is preferably regular.

6. A camshaft in accordance with Claim 1, characterised in that the beads or ridges obtained by material displacement run in the circumferential direction of the shaft.

7. A camshaft in accordance with Claim 1, characterised in that the beads or ridges obtained by material displacement run substantially parallel to the axis of the camshaft.

## Revendications

1. Arbre à cames pour commander des soupapes de moteurs à combustion interne, comprenant un arbre sur lequel est glissée et solidarisée au moins une came ayant une cavité pour recevoir l'arbre, et dans la zone prévue pour la came, l'arbre a un diamètre augmenté par rapport à celui de ses autres zones, et dans cette zone on a formé par laminage ou calandrage, par refoulement de matière, des bourrelets ou des nervures, caractérisé en ce que la came (2) est formée par forgeage et la cavité (4) de la came qui reçoit l'arbre ((1) est élargie au moins d'un côté et au moins sur une partie de sa longueur axiale, à la manière d'un entonnoir, et la dimension extérieure de l'ouverture de l'embouchure de la partie élargie (6) en forme d'entonnoir correspond sensiblement à la hauteur radiale des bourrelets ou nervures (7), la longueur axiale de la partie élargie (6) en forme d'entonnoir de la cavité (4) ne correspond qu'à une fraction de la largeur (B) de la came (2), le rapport entre les longueurs étant de l'ordre de 1/5 et l'angle d'ouverture de la partie étendue en forme d'entonnoir (6) est environ de 20°.

2. Arbre à cames selon la revendication 1, caractérisé en ce que la hauteur radiale des bourrelets ou nervures (7) augmente suivant la direction axiale de l'arbre (1), du côté de l'entrée ou de l'engagement de la came (2) suivant une forme de coin ou de cône (figure 5).

3. Arbre à cames selon la revendication 1, caractérisé en ce que la cavité dans la came pour recevoir l'arbre a une forme différente de celle d'un cercle, par exemple une forme ovale, le plus petit diamètre de cette cavité ovale étant légèrement supérieur au diamètre des segments situés entre les zones élargies de l'arbre et le plus grand diamètre de la cavité ovale étant inférieur à la hauteur radiale des bourrelets ou nervures.

4. Arbre à cames selon l'une des revendications 1 à 3, caractérisé en ce que la cavité (4) de la came (2) possède un tracé continu sur toute sa périphérie pour recevoir l'arbre (1).

5. Arbre à cames selon l'une des revendications 1 à 3, caractérisé en ce que la cavité (4) de la came (2) présente une périphérie à tracé discontinu pour recevoir l'arbre (1), par exemple sous la forme d'un polygone, de préférence régulier.

6. Arbre à cames selon la revendication 1, caractérisé en ce que les bourrelets ou nervures obtenus par refoulement de matière sont dans la direction périphérique de l'arbre.

7. Arbre à cames selon la revendication 1, caractérisé en ce que les bourrelets ou nervures obtenus par refoulement de matière sont essentiellement parallèles à l'axe de l'arbre à cames.
